(19) Europäisches Patentamt / European Patent Office / Office européen des brevets

(11) **EP 4 697 119 A1**

(12) **EUROPEAN PATENT APPLICATION**
published in accordance with Art. 153(4) EPC

(43) Date of publication:
**18.02.2026 Bulletin 2026/08**

(21) Application number: **24883552.2**

(22) Date of filing: **01.11.2024**

(51) International Patent Classification (IPC):
**G05D 1/49** (2024.01)

(52) Cooperative Patent Classification (CPC):
**G05D 1/495; G05D 1/2232; B64U 2201/00;
G05D 2109/254**

(86) International application number:
**PCT/CN2024/129456**

(87) International publication number:
**WO 2025/260589 (26.12.2025 Gazette 2025/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.06.2024 CN 202410779678**

(71) Applicant: **Shenzhen Hobbywing Technology Co.,
Ltd.
Shenzhen 518000 (CN)**

(72) Inventors:
- **LUO, Jianbin**
  **Shenzhen, Guangdong 518000 (CN)**
- **XU, Lei**
  **Shenzhen, Guangdong 518000 (CN)**
- **ZHONG, Weiqing**
  **Shenzhen, Guangdong 518000 (CN)**
- **LIU, Youhui**
  **Shenzhen, Guangdong 518000 (CN)**

(74) Representative: **Santarelli
Tour Trinity
1 bis Place de la Défense
92400 Courbevoie (FR)**

(54) **PARAMETER SETTING METHOD AND APPARATUS, AND MULTI-ROTOR UNMANNED AERIAL VEHICLE**

(57)    The present disclosure relates to the technical field of drone control, and in particular, relates to a method and apparatus for setting parameters and a multi-rotor drone. The method is applicable to multi-rotor drones. **In** the method, identity information of all the electronic speed controllers is acquired; parameter information of the electronic speed controllers is parsed based on the identity information, wherein the parameter information includes parameters in a common control parameter domain and parameters in an independent control parameter domain; parameter information that is modified by the user is acquired; parameters in the common control parameter domain of all the electronic speed controllers are updated based on modified parameters in the common control parameter domain; and parameters in the independent control parameter domain of the target electronic speed controller are updated based on modified parameters in the independent control parameter domain. In this method, the parameter information of the electronic speed controllers is divided into the parameters in the public control parameter domain and the parameters in the independent control parameter domain, and these two types of parameters are updated in different ways. **In** this way, the system ensures coordinated operations based on the parameters in the public control parameter domain and the parameters in the independent control parameter domain, such that the accuracy of parameter updates is enhanced.

EP 4 697 119 A1

| acquiring identity information of all the electronic speed controllers | S11 |

| parsing parameter information of the electronic speed controllers based on the identity information to support a user in modifying the parameter information of a target electronic speed controller based on the identity information, wherein the parameter information comprises parameters in a common control parameter domain and parameters in an independent control parameter domain | S12 |

| acquiring parameters in the common control parameter domain and parameters in the independent control parameter domain of the target electronic speed controller that are modified by the user | S13 |

| updating parameters in the common control parameter domain of all the electronic speed controllers based on the modified parameters in the common control parameter domain | S14 |

| updating parameters in the independent control parameter domain of the target electronic speed controller based on the modified parameters in the independent control parameter domain | S15 |

FIG. 1

**Description**

**Cross-reference to related application**

This application is based upon and claims priority to Chinese Patent Application No. 202410779678.8, filed before China National Intellectual Property Administration on June 17, 2024 and entitled "METHOD AND APPARATUS FOR SETTING PARAMETERS, AND MULTI-ROTOR DRONE," the entire content of which is incorporated herein by reference.

**Technical Field**

The present disclosure relates to the technical field of drone control, and in particular, relates to a method and apparatus for setting parameters and a multi-rotor drone.

**Background of the Invention**

In a multi-rotor drone system, a power system of the drone and a flight controller system (also referred to as a flight control unit), which controls a flight attitude of the drone, are essential components. The flight control unit is capable of controlling motors and propellers in the power system via electronic speed controllers to achieve flight and attitude adjustments. Accordingly, a corresponding power system is typically designed for a multi-rotor drone system to enable stable flight. For example, assuming that a 6-rotor drone has a total weight of 30 kg, and considering that the power system typically needs to provide a thrust approximately twice the overall weight, each rotor is required to generate a thrust of around 10 kg. Based on this, where the overall design of the drone system changes, for example, a change in the number of rotors or the total weight of the drone, the conventional design may no longer satisfy the control requirements of the system. This may result in issues such as an insufficient or excessive thrust that causes takeoff failures, or extremely slow or fast response that leads to unstable flight attitude or even drone crashes, thereby posing significant safety risks.

**Summary of the invention**

Some embodiments of the present disclosure are primarily directed to addressing the technical problem of significant safety risks that may arise in conventional multi-rotor drone systems when the overall system design is modified.

In a first aspect of the embodiments of the present disclosure, a method for setting parameters is provided. The method is applicable to a multi-rotor drone. The multi-rotor drone comprises a parameter adjustment system and a plurality of electronic speed controllers. The parameter adjustment system is communicably connected to the plurality of electronic speed controllers. The method comprises:

acquiring identity information of all the electronic speed controllers;
parsing parameter information of the electronic speed controllers based on the identity information to support a user in modifying the parameter information of a target electronic speed controller based on the identity information, wherein the parameter information comprises parameters in a common control parameter domain and parameters in an independent control parameter domain;
acquiring parameters in the common control parameter domain and parameters in the independent control parameter domain of the target electronic speed controller that are modified by the user;
updating parameters in the common control parameter domain of all the electronic speed controllers based on the modified parameters in the common control parameter domain; and
updating parameters in the independent control parameter domain of the target electronic speed controller based on the modified parameters in the independent control parameter domain.

In some embodiments, the parameter adjustment system and all the electronic speed controllers are accessed to a same CAN bus network, and acquiring the identity information of all the electronic speed controllers comprises:

transmitting a heartbeat packet query command to all the electronic speed controllers over the CAN bus network, such that the electronic speed controllers delay reporting their heartbeat packets to the parameter adjustment system over the CAN bus network upon receipt of the heartbeat packet query command; and
parsing the heartbeat packets via the parameter adjustment system to acquire the identity information of all the electronic speed controllers, wherein the identity information comprises addresses of the electronic speed controllers.

In some embodiments, delaying reporting their heartbeat packets to the parameter adjustment system over the CAN bus network upon receipt of the heartbeat packet query command comprises:

determining to delay the reporting by a predetermined time T based on the addresses of the electronic speed controllers; and

delaying, by the predetermined time T, reporting the heartbeat packets to the parameter adjustment system upon receipt of the heartbeat packet query command.

In some embodiments, the predetermined time T corresponding to each of the electronic speed controllers at least satisfies:

$$\text{predetermined time T} \geq \text{size of address} \times \frac{\text{number of transmitted bits} \times 8 \text{ bit}}{\text{communication rate}} +$$

$$\text{response delay of communication system,}$$

wherein an address size is acquired based on the addresses of the electronic speed controllers.

In some embodiments, parsing the parameter information of the electronic speed controllers based on the identity information comprises:

acquiring and parsing, based on the address of any of the electronic speed controllers, the parameters in the common control parameter domain of the electronic speed controller by point-to-point communication; and

acquiring, based on the addresses of all the electronic speed controllers, the parameters in the independent control parameter domain of the electronic speed controllers by point-to-point polling; and

In some embodiments, the parameter adjustment system comprises an interaction component, wherein the interaction component is configured to display the addresses and corresponding parameter information of the electronic speed controllers, and respond to an interaction operation of the user, the interaction operation including modifying the parameter information of the target electronic speed controller by the user based on the addresses of the electronic speed controllers.

In some embodiments, updating the parameters in the common control parameter domain of all the electronic speed controllers based on the modified parameters in the common control parameter domain comprises:

advertising the modified parameters in the common control parameter domain to the CAN bus network by broadcast communication, such that all the electronic speed controllers acquire and store the modified parameters in the common control parameter domain over the CAN bus network.

In some embodiments, updating the parameters in the independent control parameter domain of the target electronic speed controller based on the modified parameters in the independent control parameter domain comprises:

point-to-point polling communicating the modified parameters in the independent control parameter domain with the address of the target electronic speed controller to write the parameters in the independent control parameter domain into a corresponding target electronic speed controller, such that the target electronic speed controller stores corresponding parameters in the independent control parameter domain.

In a second aspect of the embodiments of the present disclosure, a parameter setting apparatus is provided. The apparatus is applicable to a multi-rotor drone. The multi-rotor drone comprises a parameter adjustment system and a plurality of electronic speed controllers. The parameter adjustment system is communicably connected to the plurality of electronic speed controllers. The apparatus comprises:

an electronic speed controller identification module, configured to acquire identity information of all the electronic speed controllers;

an address parsing module, configured to parse parameter information of the electronic speed controllers based on the identity information to support a user in modifying the parameter information of a target electronic speed controller based on the identity information, wherein the parameter information comprises parameters in a common control parameter domain and parameters in an independent control parameter domain;

a parameter modification module, configured to acquire parameters in the common control parameter domain and parameters in the independent control parameter domain of the target electronic speed controller that are modified by the user;

a first parameter setting module, configured to update parameters in the common control parameter domain of all the electronic speed controllers based on the modified parameters in the common control parameter domain; and

a second parameter setting module, configured to update parameters in the independent control parameter domain of the target electronic speed controller based on the modified parameters in the independent control parameter domain.

In a third aspect of the embodiments of the present disclosure, a multi-rotor drone is provided. The multi-rotor drone comprises:

at least one processor and a memory;
wherein the memory is coupled to the at least one processor, and the memory is configured to store one or more instructions or programs, wherein the one or more instructions or programs, when loaded and run by the at least one processor, cause the at least one processor to perform the method for setting parameters as described above.

In a fourth aspect, the embodiments of the present disclosure further provide a non-volatile computer-readable storage medium storing one or more computer-executable instructions; wherein the one or more computer-executable instructions, when executed by an electronic device, cause the electronic device to perform the method for setting parameters as described above.

In a fifth aspect, the embodiments of the present disclosure further provide a computer program product including a computer program stored in a non-volatile computer readable storage medium; wherein the computer program comprises one or more program instructions, wherein the one or more program instructions, when executed by an electronic device, cause the electronic device to perform the method for setting parameters as described above.

In the method for setting parameters and apparatus, and the multi-rotor drone according to the embodiments of the present disclosure, the identity information of all the electronic speed controllers is acquired; the parameter information of the electronic speed controllers is parsed based on the identity information to support the user in modifying the parameter information of the target electronic speed controller based on the identity information, wherein the parameter information comprises the parameters in the common control parameter domain and the parameters in the independent control parameter domain; the parameters in the common control parameter domain and the parameters in the independent control parameter domain of the target electronic speed controller that are modified by the user are acquired; the parameters in the common control parameter domain of all the electronic speed controllers are updated based on the modified parameters in the common control parameter domain; and the parameters in the independent control parameter domain of the target electronic speed controller are updated based on the modified parameters in the independent control parameter domain. In this method, the parameter information of the electronic speed controllers is divided into the parameters in the public control parameter domain and the parameters in the independent control parameter domain. The modified parameters in the public control parameter domain are broadcast to ensure that the entire system operates in a coordinated manner based on latest parameters in the public control parameter domain, such that the communication efficiency is improved and the parameter update process is simplified. In addition, the modified parameters in the independent control parameter domain are directly written to the target electronic speed controller at the corresponding address using a point-to-point polling communication strategy, such that the accuracy of parameter updates and the uniqueness of the target device are ensured, and hence the flexibility and configurability of the system are enhanced.

## Brief Description of the Drawings

One or more embodiments are illustrated by way of example, and not by limitation, in the accompanying drawings, wherein components having the same reference numeral designations represent like components throughout. The drawings are not to scale, unless otherwise disclosed.

FIG. 1 is a schematic flowchart of a method for setting parameters according to some embodiments of the present disclosure;
FIG. 2 is a schematic structural diagram of a parameter setting apparatus according to some embodiments of the present disclosure; and
FIG. 3 is a schematic structural diagram of a multi-rotor drone according to some embodiments of the present disclosure.

## Detailed Description of the Embodiments

For clearer descriptions of the objectives, technical solutions, and advantages of the present disclosure, the present disclosure is further described with reference to specific embodiments and attached drawings. It should be understood that the specific embodiments described herein are only intended to explain the present disclosure instead of limiting the present disclosure.

It should be noted that, in the absence of conflict, embodiments of the present disclosure and features in the embodiments may be incorporated, which all fall within the protection scope of the present disclosure. In addition, although logic function module division is illustrated in the schematic diagrams of apparatuses, and logic sequences are illustrated in the flowcharts, in some occasions, steps illustrated or described by using modules different from the module division in the apparatuses or in sequences different from those illustrated. Unless the context clearly requires otherwise, throughout the specification and the claims, technical and scientific terms used herein denote the meaning as commonly understood by a person skilled in the art. Additionally, the terms used in the specification of the present disclosure are merely for describing the objects of the specific embodiments, and are not intended to limit the present disclosure. As used herein, the term "and/or" in reference to a list of one or more items covers all of the following interpretations of the term: any of the items in the list, all of the items in the list and any combination of the items in the list.

For a multi-rotor drone, in order to ensure stable flight, a parameter adjustment system and electronic speed controllers (ESC) are typically provided to adjust flight control parameters to adapt to a customized power system. Where the overall design of the drone is modified, the power system needs to be reconfigured accordingly to avoid flight issues caused by an insufficient thrust or an abnormal response. Accordingly, some embodiments of the present disclosure provide a method for setting parameters. The method is applicable to a multi-rotor drone. The multi-rotor drone comprises a parameter adjustment system and a plurality of electronic speed controllers. The parameter adjustment system is communicably connected to the plurality of electronic speed controllers. The method comprises: Typically, each electronic speed controller is connected to a motor, and the parameter adjustment system is used to adjust the motor via the electronic speed controller. The number of electronic speed controllers in a multi-rotor drone is equal to the number of rotors. For example, a small-sized 4-rotor drone typically has four electronic speed controllers and four motors. The electronic speed controllers control speeds of the motors based on received PWM signals, and hence the flight attitude of the drone is adjusted.

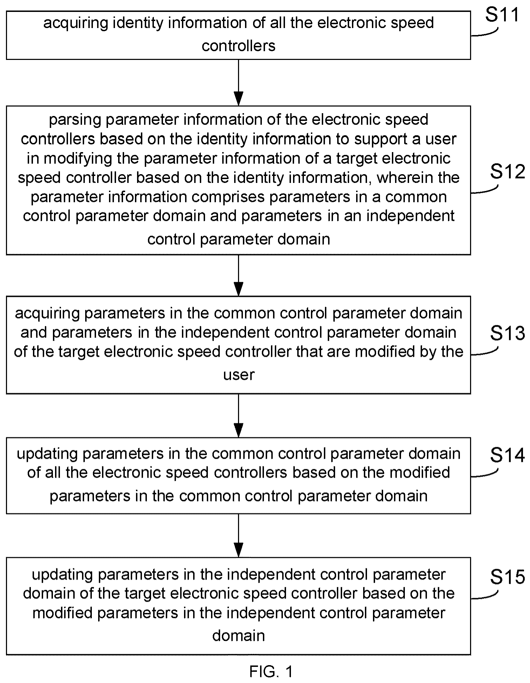

Referring to FIG. 1, the method for setting parameters according to the embodiments of the present disclosure comprises the following steps.

S11, acquiring identity information of all the electronic speed controllers.

In the embodiments of the present disclosure, the parameter adjustment system is connected to all the electronic speed controllers of the multi-rotor drone over the same CAN bus network. Over the CAN bus network, data exchange based on CAN communication may be performed with each individual electronic speed controller. In this network, each electronic speed controller may be assigned a unique address representing its node identity. Additionally, the host may advertise broadcast information or specific address information within the network. Where the host advertises the broadcasts information, all nodes (electronic speed controllers) in the CAN bus network may receive the broadcast message. Where the host advertises the specific address information, for example, a point-to-point addressing data frame directed to a specific identity (address) of a target node, only the electronic speed controller corresponding to the specific identity address may receive the information. In the embodiments of the present disclosure, the parameter adjustment system may serve as the host of the CAN bus network. In other embodiments, a separate control device may be designated as the host.

Specifically, the parameter adjustment system may transmit a heartbeat query command to all the electronic speed controllers by advertise broadcast information over the CAN bus network. Once all the electronic speed controllers, which are the nodes of the CAN bus network, receive the command, the electronic speed controllers may delay, by a predetermined time, reporting a heartbeat packet to the parameter adjustment system after a predetermined time. The parameter adjustment system may then parse data in the heartbeat message, which typically comprises the identity information of the electronic speed controller that transmits the heartbeat packet, for example, the address of the electronic speed controller. The parameter adjustment system may identify which electronic speed controller transmits which heartbeat packet based on the data contained in the heartbeat message. In other embodiments, the identity information may also comprise unique identifiers, and the parameter adjustment system (or host) may distinguish different electronic speed controllers using the unique identifiers.

It is understood that when a plurality of devices transmit data to the bus simultaneously or almost simultaneously, a "frame collision" may occur, that is, collision of a plurality of data packets (such as the heartbeat packets in the embodiments) on the bus, which leads to data corruption or loss. Accordingly, in the embodiments of the present disclosure, subsequent to receiving the heartbeat query command, each electronic speed controller may delay, by a predetermined time T, reporting a heartbeat packet to the parameter adjustment system. The electronic speed controller determines the predetermined time T based on its own address in order to reduce the occurrence of frame collisions or frame loss on the bus.

In the embodiments of the present disclosure, the predetermined time T corresponding at least satisfies:

$$\text{predetermined time } T \geq \text{size of address} \times \frac{\text{number of transmitted bits} \times 8 \text{ bit}}{\text{communication rate}} +$$

$$\text{response delay of communication system},$$

wherein an address size is acquired based on the addresses of the electronic speed controllers. Therefore, each electronic speed controller may correspond to a different predetermined time T. It may be understood that wherein the predetermined time T is too long, it may also result in a decrease in communication efficiency. Therefore, in practice, the predetermined time T may be set to a relatively appropriate value based on specific system scenarios and requirements, while still meeting the above-mentioned conditions. This may be done either by empirically determining an appropriate predetermined time T or through testing and experimentation.

S12, parsing parameter information of the electronic speed controllers based on the identity information to support a user in modifying the parameter information of a target electronic speed controller based on the identity information, wherein the parameter information comprises parameters in a common control parameter domain and parameters in an independent control parameter domain.

In the embodiments of the present disclosure, the control parameter domain of the electronic speed controller is divided into a public control parameter domain and an independent control parameter domain. Based on this, the parameter information of the electronic speed controller also corresponds to both parameters in the public control parameter domain and parameters in the independent control parameter domain. The public control parameter domain refers to parameters that are common to all or the majority of the electronic speed controllers and need to be uniformly managed and configured, such as thrust-related parameters, response-related parameters, and other parameters associated with the basic operation and safety of the system. The independent control parameter domain refers to parameters that may vary across different electronic speed controllers and need to be configured and managed separately, such as steering (e.g., left turn for one side, right turn for the other side), lighting color (e.g., different lighting color requirements for different rotors of the drone), and other parameters related to the specific functions or optimizations of the device.

**In** a case where the parameter adjustment system receives all the heartbeat packets from the CAN bus network, the addresses of all the electronic speed controllers may be acquired by parsing these heartbeat packets. Since the parameters in the common control parameter domain of all the electronic speed controllers are the same, according to the embodiments of the present disclosure, the parameters in the common control parameter domain of the electronic speed controller are acquired and parsed based on the address of any of the electronic speed controllers by point-to-point communication. Since the parameters in the common control parameter domain of different electronic speed controllers may be different, according to the embodiments of the present disclosure, the parameters in the independent control parameter domain of the electronic speed controllers are acquired based on the addresses of all the electronic speed controllers by point-to-point polling. Thus, the parameter adjustment system may acquire the addresses of all electronic speed controllers from the heartbeat packets, and further acquire the parameter information of all the electronic speed controllers based on the addresses.

This method supports the user in precisely adjusting the parameters of the target electronic speed controller based on the address, dividing the parameter information of the electronic speed controller into the parameters in the public control parameter domain and the parameters in the independent control parameter domain. For precise acquisition of the parameter information, two approaches are used: first, point-to-point communication is employed, wherein the parameters in the public control parameter domain are acquired by specifying the address of any of the electronic speed controllers; second, a polling communication strategy is used to sequentially establish connections with all the electronic speed controllers to acquire the corresponding parameters in the independent control parameter domain. This ensures the accuracy and flexibility of parameter management.

S13, acquiring parameters in the common control parameter domain and parameters in the independent control parameter domain of the target electronic speed controller that are modified by the user.

In the embodiments of the present disclosure, the parameter adjustment system further comprises an interaction component. The addresses of the electronic speed controllers and the corresponding parameter information, that is, the addresses of all the electronic speed controllers, the parameters in the public control parameter domain, and the parameters in the independent control parameter domain parsed in step S12, may be displayed via the interaction component, for view by the user. The interaction component may also respond to an interaction operation of the user, wherein the interaction operation comprises modifying the parameter information, including the parameters in the public control parameter domain and the parameters in the independent control parameter domain, of the target electronic speed controller by the user based on the addresses of the electronic speed controllers, for the convenience of modification by the user.

Specifically, in some embodiments, the interaction component may be a remote controller, which displays the addresses and the parameter information of the electronic speed controllers on a display screen of the remote controller. The user may modify the relevant parameters through the buttons, switches, and joysticks on the remote controller. In other embodiments, the interaction component may be a device that carries a program. For example, some customized drones allow users to adjust relevant parameters through control software on a computer. The user may enter a parameter setting interface using a control program, select the parameters to be adjusted, and make corresponding modifications. In this case, the user typically needs to have some professional knowledge and technical background. For example, for consumer-grade drones, manufacturers may provide a mobile APP as a tool for drone parameter adjustment, such that the user is allowed to modify the relevant parameters by connecting to the drone via the mobile APP. In other embodiments, the interaction component may also be a touchscreen. For example, a drone may be equipped with a touchscreen as an auxiliary operating interface, such that the user is allowed to intuitively view and modify the relevant parameters of the drone through the touchscreen. It should be understood that the various interaction components described above are merely examples for ease of explanation and do not constitute a limitation.

The user may modify the parameter information of the target electronic speed controller via the interaction component. Depending on the specific application scenario, the target electronic speed controller may refer all the electronic speed controllers in the CAN bus network, some of the electronic speed controllers, or a single one of the electronic speed controllers. The user may modify the parameters in the public control parameter domain and/or the parameter in the independent control parameter domain of the target electronic speed controller. Modifications to the parameters in the public control parameter domain need to be identical for all target electronic speed controllers.

S14, updating parameters in the common control parameter domain of all the electronic speed controllers based on the modified parameters in the common control parameter domain.

In a case where the user modifies the parameter information of the target electronic speed controller, the parameter adjustment system may acquire the modified parameters in the common control parameter domain via the interaction component, and the parameters in the common control parameter domain need to be consistent for all the electronic speed controllers. Therefore, according to the embodiments of the present disclosure, the modified parameters in the common control parameter domain are advertised to the CAN bus network by broadcast communication, such that all the electronic speed controllers acquire and store the modified parameters in the common control parameter domain over the CAN bus network.

This approach allows the modified parameters to be broadcast over the CAN bus network. All the electronic speed controller nodes connected to the CAN bus network may receive and store the updated parameters, ensuring that the entire system operates in coordination based on the latest parameters in the public control parameter domain. This improves the communication efficiency and reliability of the system while simplifying the parameter update process.

S15, updating parameters in the independent control parameter domain of the target electronic speed controller based on the modified parameters in the independent control parameter domain.

In a case where the user modifies the parameter information of the target electronic speed controller, the parameter adjustment system may acquire the modified parameters in the common control parameter domain via the interaction component, and the parameters in the independent control parameter domain of different target electronic speed controllers may be different. Therefore, according to the embodiments of the present disclosure, the modified parameters in the independent control parameter domain are point-to-point polling communicated with the address of the target electronic speed controller to write the parameters in the independent control parameter domain into a corresponding target electronic speed controller, such that the target electronic speed controller stores corresponding parameters in the independent control parameter domain.

This approach matches the modified parameters in the independent control parameter domain with the address of the target electronic speed controller. Using a point-to-point polling communication strategy, the modified parameters are directly written to the target electronic speed controller at the corresponding address, such that the accuracy of the parameter update and the uniqueness of the target device are ensured, and hence data collision that may arise from broadcast communication is avoided. In this manner, the target electronic speed controller may store and apply the latest parameters in the independent control parameter domain, such that precise control of specific devices (e.g., motors) is implemented, and hence the flexibility and configurability of the system are enhanced.

In the method for setting parameters for a multi-rotor drone according to the embodiments of the present disclosure, the identity information of all the electronic speed controllers is acquired; the parameter information of the electronic speed controllers is parsed based on the identity information to support the user in modifying the parameter information of the target electronic speed controller based on the identity information, wherein the parameter information comprises the parameters in the common control parameter domain and the parameters in the independent control parameter domain; the parameters in the common control parameter domain and the parameters in the independent control parameter domain of the target electronic speed controller that are modified by the user are acquired; the parameters in the common control parameter domain of all the electronic speed controllers are updated based on the modified parameters in the common control parameter domain; and the parameters in the independent control parameter domain of the target electronic speed controller are updated based on the modified parameters in the independent control parameter domain. In this method, the parameter information of the electronic speed controllers is divided into the parameters in the public control parameter domain and the parameters in the independent control parameter domain. The modified parameters in the public control parameter domain are broadcast to ensure that the entire system operates in a coordinated manner based on latest parameters in the public control parameter domain, such that the communication efficiency is improved and the parameter update process is simplified. In addition, the modified parameters in the independent control parameter domain are directly written to the target electronic speed controller at the corresponding address using a point-to-point polling communication strategy, such that the accuracy of parameter updates and the uniqueness of the target device are ensured, and hence the flexibility and configurability of the system are enhanced.

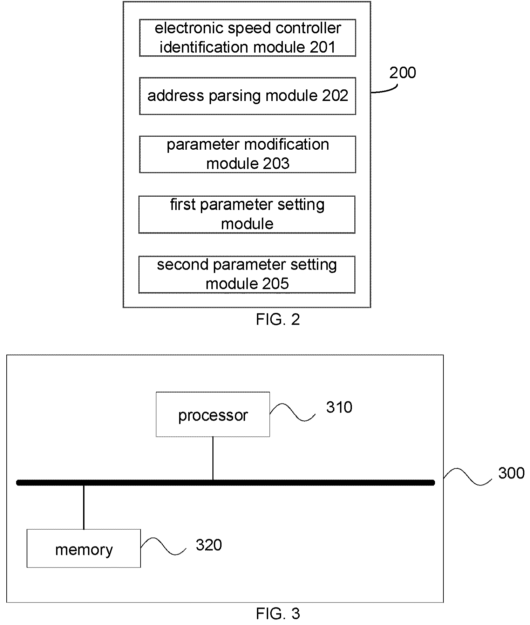

Some embodiments of the present disclosure provide a parameter setting apparatus. The apparatus is applicable to a multi-rotor drone. The multi-rotor drone comprises a parameter adjustment system and a plurality of electronic speed controllers. The parameter adjustment system is communicably connected to the plurality of electronic speed controllers. Referring to FIG. 2, the apparatus setting apparatus 200 comprises an electronic speed controller identification module 201, an address parsing module 202, a parameter modification module 203, a first parameter setting module 204, and a second parameter setting module 205.

Specifically, the electronic speed controller identification module 201 is configured to acquire identity information of all the electronic speed controllers; the address parsing module 202 is configured to parse parameter information of the electronic speed controllers based on the identity information to support a user in modifying the parameter information of a target electronic speed controller based on the identity information, wherein the parameter information comprises parameters in a common control parameter domain and parameters in an independent control parameter domain; parameter modification module 203 is configured to acquire parameters in the common control parameter domain and parameters in the independent control parameter domain of the target electronic speed controller that are modified by the user; the first parameter setting module 204 is configured to update parameters in the common control parameter domain of all the electronic speed controllers based on the modified parameters in the common control parameter domain; and the second parameter setting module 205 is configured to update parameters in the independent control parameter domain of the target electronic speed controller based on the modified parameters in the independent control parameter domain.

It should be noted that the parameter setting apparatus is capable of performing the method for setting parameters according to the embodiments of the present disclosure, has corresponding function modules for performing the method, and achieves the corresponding beneficial effects. For technical details that are not illustrated in detail in the embodiments for the parameter setting apparatus, reference may be made to the description of the method for setting parameters according to the embodiments of the present disclosure.

Some embodiments of the present disclosure provide a multi-rotor drone. Referring to FIG. 3, the multi-rotor drone comprises one or more processors 310 and a memory 320. FIG. 3 uses one processor 310 as an example.

The processor 310 and the memory 320 may be connected via a bus or in other manners, and FIG. 3 uses the bus as an example.

The memory 320, as a non-volatile computer readable storage medium, may be configured to store non-volatile software programs, non-volatile computer executable programs and modules, for example, the program instructions/- modules corresponding to the method for setting parameters according to the embodiments of the present disclosure. The non-volatile software programs, instructions and modules stored in the memory 320, when being executed, cause the processor 310 to perform various function applications and data processing of a solid hard disk, that is, performing the method for setting parameters according to the above method embodiments.

The memory 320 may also comprise a program storage area and a data storage area. The program storage area may store an operating system and an application implementing at least one function. In addition, the memory 320 may comprise a highspeed random-access memory, or comprise a non-volatile memory, for example, at least one disk storage device, a flash memory device, or another non-volatile solid storage device. In some embodiments, the memory 320 optionally comprises memories remotely configured relative to the processor 310.

One or a plurality of modules are stored in the memory 320, and when being executed by the at least one processor 310, perform the method for setting parameters according to any of the above method embodiments, for example, performing steps in the method as illustrated in FIG. 1.

The described apparatus embodiment is merely exemplary. The modules described as separate parts may or may not be physically separated, and parts shown as modules may or may not be physical modules, which may be located in one position, or may be distributed on multiple network modules. Part or all of the modules may be selected according to the actual needs to achieve the objects of the technical solutions of the embodiments.

Some embodiments of the present disclosure further provide a computer storage medium. The computer storage medium stores one or more instructions or programs. The one or more instructions or programs, when loaded and executed by at least one processor, cause the at least one processor to perform the method for setting parameters according to the above embodiments.

The product may perform the method for setting parameters according to the embodiments of the present disclosure, and have corresponding function modules for performing the method. For technical details that are not illustrated in detail in this embodiment, reference may be made to the description of the method for setting parameters according to the embodiments of the present disclosure.

According to the above embodiments of the present disclosure, a person skilled in the art may clearly understand that the embodiments of the present disclosure may be implemented by means of hardware or by means of software plus a necessary general hardware platform. Persons of ordinary skill in the art may understand that all or part of the steps of the methods in the embodiments may be implemented by a program instructing relevant hardware. The program may be stored in a computer-readable storage medium. When the program runs, the steps of the methods in the embodiments are performed. The storage medium may be any medium capable of storing program codes, such as a magnetic disk, a compact disc read-only memory (CD-ROM), a read-only memory (ROM), a random-access memory (RAM), or the like.

Finally, it should be noted that the above embodiments are merely used to illustrate the technical solutions of the present disclosure rather than limiting the technical solutions of the present disclosure. Under the concept of the present disclosure, the technical features of the above embodiments or other different embodiments may be combined, the steps therein may be performed in any sequence, and various variations may be derived in different aspects of the present disclosure, which are not detailed herein for brevity of description. Although the present disclosure is described in detail with reference to the above embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from the spirit and scope of the technical solutions of the embodiments of the present disclosure.

**Claims**

1.  A method for setting parameters, applicable to a multi-rotor drone, the multi-rotor drone comprising a parameter adjustment system and a plurality of electronic speed controllers, the parameter adjustment system being communicably connected to the plurality of electronic speed controllers, **characterized in that**, the method comprises:

    acquiring identity information of all the electronic speed controllers;
    parsing parameter information of the electronic speed controllers based on the identity information to support a user in modifying the parameter information of a target electronic speed controller based on the identity information, wherein the parameter information comprises parameters in a common control parameter domain and parameters in an independent control parameter domain;
    acquiring parameters in the common control parameter domain and parameters in the independent control parameter domain of the target electronic speed controller that are modified by the user;
    updating parameters in the common control parameter domain of all the electronic speed controllers based on the modified parameters in the common control parameter domain; and
    updating parameters in the independent control parameter domain of the target electronic speed controller based on the modified parameters in the independent control parameter domain.

2.  The method according to claim 1, **characterized in that**, the parameter adjustment system and all the electronic speed controllers are accessed to a same CAN bus network, and the acquiring the identity information of all the electronic speed controllers comprises:

    transmitting a heartbeat packet query command to all the electronic speed controllers over the CAN bus network, such that the electronic speed controllers delay reporting their heartbeat packets to the parameter adjustment system over the CAN bus network upon receipt of the heartbeat packet query command; and
    parsing the heartbeat packets via the parameter adjustment system to acquire the identity information of all the electronic speed controllers, wherein the identity information comprises addresses of the electronic speed controllers.

3.  The method according to claim 2, **characterized in that**, delaying reporting their heartbeat packets to the parameter adjustment system over the CAN bus network upon receipt of the heartbeat packet query command comprises:

    determining to delay the reporting by a predetermined time T based on the addresses of the electronic speed controllers; and
    delaying, by the predetermined time T, reporting the heartbeat packets to the parameter adjustment system upon receipt of the heartbeat packet query command.

4.  The method according to claim 3, **characterized in that**, the predetermined time T corresponding to each of the electronic speed controllers at least satisfies:

$$\text{predetermined time } T \geq \text{size of address} \times \frac{\text{number of transmitted bits} \times 8 \text{ bit}}{\text{communication rate}} +$$

$$\text{response delay of communication system,}$$

wherein an address size is acquired based on the addresses of the electronic speed controllers.

5. The method according to claim 2, **characterized in that**, the parsing the parameter information of the electronic speed controllers based on the identity information comprises:

   acquiring and parsing, based on the address of any of the electronic speed controllers, the parameters in the common control parameter domain of the electronic speed controller by point-to-point communication; and acquiring, based on the addresses of all the electronic speed controllers, the parameters in the independent control parameter domain of the electronic speed controllers by point-to-point polling.

6. The method according to claim 2, **characterized in that**, the parameter adjustment system comprises an interaction component, wherein the interaction component is configured to display the addresses and corresponding parameter information of the electronic speed controllers, and respond to an interaction operation of the user, the interaction operation comprising modifying the parameter information of the target electronic speed controller by the user based on the addresses of the electronic speed controllers.

7. The method according to claim 2, **characterized in that**, the updating the parameters in the common control parameter domain of all the electronic speed controllers based on the modified parameters in the common control parameter domain comprises:
   advertising the modified parameters in the common control parameter domain to the CAN bus network by broadcast communication, such that all the electronic speed controllers acquire and store the modified parameters in the common control parameter domain over the CAN bus network.

8. The method according to claim 2, **characterized in that**, the updating the parameters in the independent control parameter domain of the target electronic speed controller based on the modified parameters in the independent control parameter domain comprises:
   point-to-point polling communicating the modified parameters in the independent control parameter domain with the address of the target electronic speed controller to write the parameters in the independent control parameter domain into a corresponding target electronic speed controller, such that the target electronic speed controller stores corresponding parameters in the independent control parameter domain.

9. An apparatus for setting parameters, applicable to a multi-rotor drone, the multi-rotor drone comprising a parameter adjustment system and a plurality of electronic speed controllers, the parameter adjustment system being communicably connected to the plurality of electronic speed controllers, **characterized in that** the apparatus comprises:

   an electronic speed controller identification module, configured to acquire identity information of all the electronic speed controllers;
   an address parsing module, configured to parse parameter information of the electronic speed controllers based on the identity information to support a user in modifying the parameter information of a target electronic speed controller based on the identity information, wherein the parameter information comprises parameters in a common control parameter domain and parameters in an independent control parameter domain;
   a parameter modification module, configured to acquire parameters in the common control parameter domain and parameters in the independent control parameter domain of the target electronic speed controller that are modified by the user;
   a first parameter setting module, configured to update parameters in the common control parameter domain of all the electronic speed controllers based on the modified parameters in the common control parameter domain; and
   a second parameter setting module, configured to update parameters in the independent control parameter domain of the target electronic speed controller based on the modified parameters in the independent control parameter domain.

10. A multi-rotor drone, **characterized in that**, comprises:

    at least one processor and a memory;
    wherein the memory is coupled to the at least one processor, and the memory is configured to store one or more instructions or programs, wherein the one or more instructions or programs, when loaded and run by the at least one processor, cause the at least one processor to perform the method for setting parameters as defined in any one of claims 1 to 8.

11. A non-volatile computer-readable storage medium storing one or more computer-executable instructions; **characterized in that**, the one or more computer-executable instructions, when loaded and executed by an electronic device, cause the electronic device to perform the method for setting parameters as defined in any one of claims 1 to 8.

**12.** A computer program product, **characterized in that**, comprises: a computer program stored in a non-volatile computer-readable storage medium, the computer programs comprising one or more program instructions; wherein the one or more program instructions, when loaded and executed by an electronic device, cause the electronic device to perform the method for setting parameters as defined in any one of claims 1 to 8.

acquiring identity information of all the electronic speed controllers | S11

parsing parameter information of the electronic speed controllers based on the identity information to support a user in modifying the parameter information of a target electronic speed controller based on the identity information, wherein the parameter information comprises parameters in a common control parameter domain and parameters in an independent control parameter domain | S12

acquiring parameters in the common control parameter domain and parameters in the independent control parameter domain of the target electronic speed controller that are modified by the user | S13

updating parameters in the common control parameter domain of all the electronic speed controllers based on the modified parameters in the common control parameter domain | S14

updating parameters in the independent control parameter domain of the target electronic speed controller based on the modified parameters in the independent control parameter domain | S15

FIG. 1

electronic speed controller
identification module 201

address parsing module 202

parameter modification
module 203

first parameter setting
module

second parameter setting
module 205

200

FIG. 2

processor

310

300

memory

320

FIG. 3

## INTERNATIONAL SEARCH REPORT

| International application No. |
| --- |
| **PCT/CN2024/129456** |

| A. | CLASSIFICATION OF SUBJECT MATTER |
| --- | --- |

G05D 1/49(2024.01)i; G05D 101/10 (2024.01)i; G05D 109/20(2024.01)i

According to International Patent Classification (IPC) or to both national classification and IPC

| B. | FIELDS SEARCHED |
| --- | --- |

Minimum documentation searched (classification system followed by classification symbols)

IPC: G05D

Documentation searched other than minimum documentation to the extent that such documents are included in the fields searched

Electronic data base consulted during the international search (name of data base and, where practicable, search terms used)

CNTXT, DWPI, CJFD, WPABS, ENTXT: 无人机, 调速器, 身份, 地址, 参数, 公共, 域, 调整, 调节, governor, identity, address, parameter?, public, domain, adjust+

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| PX | CN 118605590 A (HOBBYWING TECHNOLOGY CO., LTD.) 06 September 2024 (2024-09-06) <br> claims 1-10, description, paragraphs [0041]-[0178], and figures 1-3 | 1-12 |
| A | CN 109309609 A (XAG CO., LTD.) 05 February 2019 (2019-02-05) <br> description, paragraphs [0065]-[0140], and figures 2-5 | 1-12 |
| A | CN 115774456 A (BEIJING SANKUAI ONLINE TECHNOLOGY CO., LTD.) 10 March 2023 (2023-03-10) <br> entire document | 1-12 |
| A | CN 118100734 A (HOBBYWING TECHNOLOGY CO., LTD.) 28 May 2024 (2024-05-28) <br> entire document | 1-12 |
| A | US 2009204308 A1 (CATERPILLAR INC.) 13 August 2009 (2009-08-13) <br> entire document | 1-12 |
| A | US 2018198846 A1 (CUMMINS INC.) 12 July 2018 (2018-07-12) <br> entire document | 1-12 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 March 2025** | **12 March 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/129456**

| Patent document cited in search report | | | Publication date (day/month/year) | Patent family member(s) | | | Publication date (day/month/year) |
|---|---|---|---|---|---|---|---|
| CN | 118605590 | A | 06 September 2024 | None | | | |
| CN | 109309609 | A | 05 February 2019 | EP | 3660685 | A1 | 03 June 2020 |
| | | | | JP | 2020528025 | A | 17 September 2020 |
| | | | | WO | 2019020101 | A1 | 31 January 2019 |
| | | | | US | 2020223546 | A1 | 16 July 2020 |
| | | | | KR | 20200035241 | A | 02 April 2020 |
| CN | 115774456 | A | 10 March 2023 | None | | | |
| CN | 118100734 | A | 28 May 2024 | None | | | |
| US | 2009204308 | A1 | 13 August 2009 | US | 7945370 | B2 | 17 May 2011 |
| US | 2018198846 | A1 | 12 July 2018 | US | 10825266 | B2 | 03 November 2020 |
| | | | | US | 2021074084 | A1 | 11 March 2021 |
| | | | | US | 11636716 | B2 | 25 April 2023 |

Form PCT/ISA/210 (patent family annex) (July 2022)

**EP 4 697 119 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410779678